# EUROPÄISCHE PATENTANMELDUNG

(11) **EP 1 238 951 A1**
(43) Veröffentlichungstag der Anmeldung: **11.09.2002**
(21) Anmeldenummer: 02005105.8
(22) Anmeldetag: 07.03.2002
(51) Int. Cl.: C04B 28/00, C04B 14/04, C04B 14/46

(54) **Baustoffmischung zur Herstellung von Leichtbeton**

(30) Priorität: 07.03.2001 DE 10111016
(71) Anmelder: Horn, Helmut, 98527 Suhl (DE)
(72) Erfinder: Horn, Helmut, 98527 Suhl (DE)
(74) Vertreter: Engel, Christoph Klaus

(57) **Zusammenfassung**

Die Erfindung betrifft eine Baustoffmischung, hergestellt durch Zusatz von zumindest Wasser zu einer Ausgangsmischung, bestehend aus den Stoffen Zement, Basalt-Steinmehl, Schmelztonerde und Vinyl-Acetat-Versatat-Copolymere. Aus dieser Baustoffmischung können Leichtbeton-, Estrich-, Nivelliermassen- oder Spachtelmassenmischungen hergestellt werden. Gemäß vorteilhaften Ausführungsformen werden der Stoffmischung noch Blähton und/oder Bläglas zugesetzt. Die Erfindung betrifft weiterhin die Verwendung der Baustoffmischung zur Herstellung von Leichtbeton, der nach einer Aushärtezeit von 7 Tagen eine Biegezugfestigkeit von mindestens 2,5 N/mm² und eine Druckfestigkeit von mindestens 11 N/mm² aufweist.

## Beschreibung

Die vorliegende Erfindung betrifft eine Baustoffmischung bzw. eine Ausgangsmischung, die unter Zusatz von zumindest Wasser zur Herstellung von Leichtbeton genutzt werden kann.

Unter Beton wird üblicherweise ein Gemisch aus Bindemittel, Zuschlägen und Wasser angesehen. Wobei als Bindemittel in der Regel Zement (ein hydraulischer Bindebaustoff) verwendet wird. Verschiedene Betonarten unterscheiden sich durch die verwendeten Zuschlagstoffe, die Dichte des Gefüges und die erzielbare Druckfestigkeit.

Als Leichtbeton werden Betonarten bezeichnet, die Leichtzuschläge wie z.B. Bims, Blähton, Styropor oder ähnliche Stoffe enthalten. Leichtbeton besitzt gegenüber Normalbeton eine deutlich verringerte Masse, so dass er häufig eingesetzt wird, wenn die Eigenmasse klein gehalten werden soll. In der Bauwirtschaft spricht man in der Regel von Leichtbeton, wenn die sogenannte Trockenrohdichte kleiner als 2000 kg/m³ ist. Bei herkömmlichem Leichtbeton wirkt sich der Zusatz der Leichtzuschläge jedoch hinsichtlich der Druckfestigkeit nachteilig aus, welche deutlich geringer als beim Normalbeton ist. Die Druckfestigkeit von Beton wird gewöhnlich in Newton pro Quadratmillimeter (N/mm²) angegeben und beträgt bei Normalbeton zwischen 20 und 30 N/mm². Demgegenüber weist herkömmlicher Leichtbeton nur eine Druckfestigkeit von etwa 2 - 5 N/mm² auf.

Aus der DE 198 31 295 A1 ist beispielsweise ein Leichtbeton bekannt, bei welchem als Zuschlagstoffe anstelle von Sand oder Kies expandierte Polystyrolkugeln verwendet werden, die eine Größe von etwa 6 mm haben. Weiterhin wird dem Leichtbeton ein Fließmittel auf Melaminharzbasis zugesetzt, wodurch im Ergebnis ein Leichtbeton mit einer Rohdichte von etwa 600 kg/m³ erzeugt wird. Dieser bekannte Leichtbeton wird mit einer Holzkonstruktion verbunden, welche in dem Bauwerk tragende Funktionen übernimmt, da der Leichtbeton selbst nur in geringem Maße statische Aufgaben übernehmen kann.

Aus der DE 196 00 445 A1 ist eine homogene ungehärtete Zusammensetzung auf der Basis von Zement bekannt, die hydraulischen Zement, puzzolanisches Material auf der Basis von Metakaolin, Betonverflüssiger enthält und durch Zusatz von Wasser zu gehärteten Formkörpern verarbeitet werden kann. Dabei geht es vor allem um die Erzielung hoher Druckfestigkeit und Dichte der herzustellenden Formkörper.

In der DE 198 57 130 A1 ist ein Verfahren zur Herstellung von Leichtbeton beschrieben. Als Zuschlagstoffe kommen hier Kunststoffabfälle zum Einsatz, die zuvor durch chemische Behandlung mit starken Laugen und/oder starken Säuren inertisiert werden müssen.

Neben dem Problem der gegenüber Normalbeton deutlich verringerten Druckfestigkeit herkömmlicher Leichtbetonarten bestehen hinsichtlich der Verwendung von Kunststoffen als Zuschläge oder Binde- bzw. Fließmittel erhebliche ökologische Bedenken. Beispielsweise können im Leichtbeton enthaltene Kunstharze über lange Zeit schädliche Gase absondern, die die Gesundheit und das Wohlbefinden von Bewohnern entsprechender Bauwerke beeinträchtigen können. Außerdem besteht aufgrund der verringerten Druckfestigkeit das Problem, dass aus Leichtbeton hergestellte Teile eines Bauwerks zumeist keine tragende Funktion übernehmen können, so dass zusätzliche Träger aus Normalbeton oder anderen Materialien (Stahl, Holz) vorgesehen werden müssen.

Eine Aufgabe der vorliegenden Erfindung besteht somit darin, eine Stoffmischung zur Herstellung von Leichtbeton anzugeben, die es ermöglicht, Leichtbeton herzustellen, der einerseits eine geringe Trockenrohdichte aufweist und andererseits eine hohe Druckfestigkeit besitzt, die mit der Druckfestigkeit von Normalbeton vergleichbar ist.

Diese und weitere Aufgaben werden durch eine Baustoffmischung gelöst, die hergestellt wird durch Zusatz von zumindest Wasser zu einer Ausgangsmischung, bestehend aus:
- Zement,
- Basalt-Steinmehl,
- Schmelztonerde,
- Vinyl-Acetat-Versatat-Copolymere.

Diese erfindungsgemäße Baustoffmischung (im weiteren vereinfacht als Stoffmischung bezeichnet) wird durch Zusatz von Wasser in entsprechender Menge zu einem Leichtbeton verarbeitet. Im Weiteren wird der Begriff "Leichtbeton" allgemein für die erfindungsgemäße Stoffmischung verwendet, auch wenn der Leichtbeton selbst erst nach Zusatz des Wassers entsteht, wodurch die gewünschten hydraulischen Bindereaktionen in Gang gesetzt werden, die letztlich zum Aushärten des Leichtbetons führen. Die als Bestandteil der erfindungsgemäßen Baustoffmischung genannte Schmelztonerde wird in an sich bekannter Weise hergestellt, indem eine Rohtonmischung getrocknet und fein gemahlen wird. Gelegentlich wird Schmelztonerde daher auch als Rohtonmehl bezeichnet.

Ein aus diesen Stoffen hergestellter Leichtbeton eignet sich besonders als Nivellier- oder Spachtelmasse, da er auch bei geringer Schichtdicke ausreichende Festigkeiten aufweist. Der die genannten Stoffe enthaltende Leichtbeton ist vor dem Aushärten selbstverlaufend und leicht spachtelbar. Die noch flüssige Leichtbetonmasse kann auf beliebige feste Untergründe aufgebracht werden und besitzt bereits nach einer Trockenzeit von etwa 24 Stunden eine hohe Zähigkeit.

In bekannter Weise kann zur besseren Verbindung zwischen einzelnen Schichten auf den Untergrund vor dem Auftragen des Leichtbetons ein Haftgrundmittel (z.B. Ottoflex) aufgebracht werden. Die Trockenrohdichte dieser ersten Ausführungsform des Leichtbetons beträgt bei geeignetem Mischungsverhältnis der einzelnen Komponenten (s.u.) etwa 1,0 - 1,2 g/cm³ (1000 - 1200 kg/m³).

Eine abgewandelte Ausführungsform des Leichtbetons zeichnet sich dadurch aus, dass die Ausgangsstoffmischung weiterhin Blähglas mit einer Körnung von 1 - 2 mm enthält. Diese Ausführungsform ist zum Einsatz als Baubeton und als Estrich geeignet. Aufgrund des unten angegebenen Mischungsverhältnisses reduziert sich die spezifische Masse des Leichtbetons gemäß dieser Ausführungsform auf etwa 0,8 g/cm³. Durch die Hinzufügung von Blähglas verbessern sich außerdem die Wärmedämmung und die Körperschalldämmung.

Die Trocknungszeit ist bei allen Ausführungsformen der Erfindung gegenüber herkömmlichem Leichtbeton deutlich verkürzt, so dass bereits nach ca. 7 Tagen beispielsweise die nächste Schicht eines Fußbodenaufbaus auf den erfindungsgemäßen Leichtbeton aufgebracht werden kann. Ein weiterer Vorteil besteht darin, dass die Brandschutzeigenschaften verbessert sind, da der erfindungsgemäß Leichtbeton keine Kunstharze enthält, und somit bei Temperaturen bis zu 1.000°C nicht brennbar ist. Ferner kann der Leichtbeton einfach und ohne Umweltbelastungen wiederverwertet (recycelt) werden.

Eine nochmals veränderte Ausführungsform des Leichtbetons enthält als Zuschlagsstoff neben Blähglas weiterhin Blähton, wobei ein Anteil von etwa 17% der Gesamtmasse zweckmäßig ist. Die o.g. vorteilhaften Eigenschaften sind auch bei dieser Stoffmischung erzielbar. Eine Veränderung ergibt sich hinsichtlich der spezifischen Masse, welche bei etwa 1,25 g/cm³ liegt, und hinsichtlich der erzielbaren Druckfestigkeit.

Es ist zweckmäßig, wenn das o.g. Basalt-Steinmehl als Hauptbestandteile Kieselsäure, Aluminiumoxid und Magnesiumoxid aufweist, wobei es weitere Metalloxide in geringen Anteilen enthalten kann.

Ein besonders zu erwähnender Vorteil des erfindungsgemäßen Leichtbetons besteht darin, dass sich bereits nach kurzen Aushärtezeiten hohe Druckfestigkeiten einstellen. So weist der Leichtbeton bereits nach 7 Tagen eine Biegezugfestigkeit von 2,5 N/mm² und eine Druckfestigkeit von 11 N/mm² auf.

Weitere Vorteile, Einzelheiten und Weiterbildungen ergeben sich aus der nachfolgenden Beschreibung bevorzugter Ausführungsformen des Leichtbetons.

Der erfindungsgemäße Leichtbeton wird gemäß einer ersten Ausführungsform als Nivellier- und Spachtelmasse verwendet. Zur Herstellung des Leichtbetons werden die folgenden Stoffe in den angegebenen Masseanteilen in herkömmlicher Weise möglichst homogen miteinander vermischt:
- Zement 39 %,
- Balsalt-Steinmehl (MSM) 16 %,
- Schmelztonerde 6 %,
- Vinyl-Acetat-Versatat-Copolymere (PAV 333) 3 %,
- Wasser 36 %.

Die Masseanteile können je nach Einsatzfall variieren. Die genannten Prozentangaben sind lediglich als vorteilhafte Durchschnittswerte anzusehen. Als Zement kann beispielsweise ein Produkt der Firma Deuna Zement GmbH mit der Produktbezeichnung CEM 1 eingesetzt werden, welches bei der Verarbeitung zu Normalbeton nach 28 Tagen eine Druckfestigkeit von etwa 50 N/mm² ergibt.

Das zu verwendende Basalt-Steinmehl wird beispielsweise vom Steinbruchbetrieb Zeilberg geliefert und besitzt die nachfolgend genannte Zusammensetzung:
- Kieselsäure 43,02 %,
- Eisenoxid 3,60 %,
- Eisenoxidol: 7,52 %,
- Aluminiumoxid 13,28 %,
- Titanoxid 1,95 %,
- Manganoxid 0,15 %,
- Calciumoxid 9,85 %,
- Magnesiumoxid 11,95 %,
- Kaliumoxid 0,95 %,
- Natriumoxid 3,44 %,
- Phosphorsäureanhydrid 0,68 %,
- Glühverlust 3,64 %.

Die Korngröße des Steinmehls liegt im Bereich von 0 - 0,1 mm. Natürlich können auch andere Steinmehle eingesetzt werden, die vergleichbare chemische Eigenschaften haben.

Bei den Vinyl-Acetat-Versatat-Copolymeren (Produktbezeichnung PAV 333), welche beispielsweise von der Firma Rhodia unter dem Handelsnamen Rhoximat bezogen werden kann, handelt es sich um ein rheologisches Additiv, welches als zementöses Bindemittel eingesetzt wird.

Der Anteil des zugesetzten Wassers kann je nach gewünschter Viskosität variieren. Für den Einsatz als Nivelliermasse wird der Wasseranteil etwas höher gewählt werden, als wenn der Leichtbeton als Spachtelmasse verwendet werden soll.

Gemäß einer abgewandelten Ausführungsform enthält der Leichtbeton neben den bereits genannten Stoffen weiterhin Blähglas mit einer Körnung von 1 - 2 mm. Diese Ausführungsform kann als Baubeton oder als Estrich eingesetzt werden. Der besondere Vorteil besteht in der sehr geringen Masse, welche etwa 0,8 g/cm³ beträgt. Vorzugsweise besteht die Stoffmischung aus den folgenden Masseanteilen:
- Blähgas 24,5 %,
- Zement 42,0 %,
- Basalt-Steinmehl (MSM) 3,5 %,
- Schmelztonerde 7,0 %,
- Vinyl-Acetat-Versatat-Copolymere (PAV 333) 2,0 %,
- Wasser 21,0 %.

Eine nochmals abgewandelte Ausführungsform zeichnet sich dadurch aus, dass als zusätzlicher Zuschlagsstoff Blähton eingesetzt wird. Als bevorzugte Anwendungsgebiete haben sich wiederum Baubeton und Estrich erwiesen. Ähnlich wie die zuvor genannte Ausführungsform eignet sich dieser Leichtbeton für Einsatzzwecke, bei denen besondere Anforderungen an die Wärmedämmung und die Köperschalldämmung gestellt werden. Der Leichtbeton trocknet schnell aus, so dass bereist nach 7 Tagen eine Fortführung der Bauarbeiten auf den hergestellten Schichten erfolgen kann, z.B. in dem eine weitere Leichtbetonschicht aufgebracht wird. Auch dieser Leichtbeton ist einfach wiederverwertbar, da keine umweltbedenklichen Stoffe enthalten sind. Zur vorgenannten Ausführungsform unterscheidet sich der Leichtbeton durch eine etwas erhöhte spezifische Masse von etwa 1,25 g/cm³. Für diese Ausführung wird die folgende Stoffmischung bevorzugt:
- Blähglas 4,5 %,
- Blähton 17,0 %,
- Zement 37,0 %,
- Basalt-Steinmehl 3,5 %,
- Schmelztonerde 7,5 %,
- Vinyl-Acetat-Versatat-Copolymere (PAV 333) 2,5 %,
- Wasser 28,0 %.

Auch bei dieser Ausführungsform hängt der benötigte Wasseranteil von dem gewünschten Einsatzgebiet ab.

Bei dem zugegebenen Blähglas wird eine Körnungsgröße von 1 - 2 mm und bei dem Blähton eine Körnungsgröße von etwa 6 mm bevorzugt.

An Leichtbetonelementen, die gemäß der dritten Ausführungsform hergestellt wurden, sind Festigkeitsmessungen durchgeführt worden, die nach einer Aushärtezeit von 7 Tagen folgende Werte ergaben:

| | |
|---|---|
| Biegezugfestigkeit | 2,5 N/mm² |
| Druckfestigkeit | 11,0 N/mm² |

Bei der genannten Zusammensetzung ergab sich eine Trockenrohdichte von 1 g/cm³.

Es hat sich gezeigt, dass mit dem erfindungsgemäßen Leichtbeton ein Werkstoff zur Verfügung steht, der gegenüber herkömmlichem Leichtbeton deutlich verbesserte Festigkeitswerte aufweist, während die erzielbare Trockenrohdichte im wesentlichen den Werten von bekannten Leichtbetonmaterialien entspricht. Außerdem verringert sich die Trocknungszeit deutlich, so dass der Bauablauf in der Regel verkürzt werden kann. Weiterhin ist es vorteilhaft, dass auf Kunststoffzusätze weitgehend bzw. vollständig verzichtet werden kann, so dass der erfindungsgemäße Leichtbeton auf einfache Weise einem Wiederverwertungsprozess zugeführt werden kann.

Die angegebenen Mischungsverhältnisse sind lediglich als Richtwerte zu verstehen. Der Fachmann wird erkennen, dass bei veränderten Anforderungen an die Eigenschaften des Leichbetons abweichende Mischungsverhältnisse gewählt werden können.

## Patentansprüche

1. Baustoffmischung, hergestellt durch Zusatz von zumindest Wasser zu einer Ausgangsmischung, bestehend aus:
• Zement,
• Basalt-Steinmehl,
• Schmelztonerde und
• Vinyl-Acetat-Versatat-Copolymer.

2. Baustoffmischung nach Anspruch 1, **dadurch gekennzeichnet, dass** sie folgende massebezogene Stoffanteile umfasst:
• 39 % Zement,
• 16 % Basalt-Steinmehl,
• 6 % Schmelztonerde,
• 3 % Vinyl-Acetat-Versatat-Copolymere,
• 36 % Wasser,
wobei die Masseanteile jeweils um ± 10 % von den angegeben Werten abweichen können.

3. Baustoffmischung nach Anspruch 1 oder 2, **dadurch gekennzeichnet, dass** sie in Form einer Leichtbeton-, Estrich-, Nivelliermassen- oder Spachtelmassenmischung vorliegt.

4. Baustoffmischung nach Anspruch 1 oder 2, **dadurch gekennzeichnet, dass** sie in Form einer Nivellier- oder Spachtelmassenmischung mit einer Trockenrohdichte von 1,0 - 1,2 g/cm³ vorliegt.

5. Baustoffmischung nach Anspruch 1, **dadurch gekennzeichnet, dass** sie weiterhin Blähglas mit einer Körnung von 1-2 mm enthält.

6. Baustoffmischung nach Anspruch 5, **dadurch gekennzeichnet, dass** sie in Form einer Leichtbeton- oder Estrichmischung mit einer Trockenrohdichte von etwa 0,8 g/cm³ vorliegt, und dass das Blähglas mit einem Masseanteil von etwa 25 % enthalten ist.

7. Baustoffmischung nach Anspruch 5, **dadurch gekennzeichnet, dass** sie weiterhin Blähton mit einer Körnung von bis zu 6 mm enthält.

8. Baustoffmischung nach Anspruch 7, **dadurch gekennzeichnet, dass** sie eine Trockenrohdichte von etwa 1,25 g/cm³ besitzt, und dass das Blähglas mit einem Masseanteil von etwa 5 % und der Blähton mit einem Masseanteil von etwa 17 % enthalten sind.

9. Baustoffmischung nach einem der Ansprüche 1 bis 8, **dadurch gekennzeichnet, dass** das Basalt-Steinmehl als Hauptbestandteile Kieselsäure, Aluminiumoxid und Magnesiumoxid.

10. Verwendung einer Baustoffmischung nach einem der Ansprüche 1 bis 9 zur Herstellung eines Leichtbetons, der nach einer Aushärtezeit von 7 Tagen eine Biegezugfestigkeit von mindestens 2,5 N/mm² und eine Druckfestigkeit von mindestens 11 N/mm² aufweist.
